(19)

Europäisches Patentamt
European Patent Office
Office européen des brevets

(11) **EP 4 474 436 A1**

(12) **EUROPEAN PATENT APPLICATION**
published in accordance with Art. 153(4) EPC

(43) Date of publication:
**11.12.2024 Bulletin 2024/50**

(21) Application number: **23747159.4**

(22) Date of filing: **30.01.2023**

(51) International Patent Classification (IPC):
*C09D 5/16* (2006.01)      *C09D 115/00* (2006.01)
*C09D 183/04* (2006.01)      *C09D 7/63* (2018.01)
*C09D 7/65* (2018.01)      *C08J 7/04* (2020.01)
*D06M 13/513* (2006.01)      *D06M 15/643* (2006.01)
*D06M 15/693* (2006.01)

(52) Cooperative Patent Classification (CPC):
**C08J 7/04; C09D 5/16; C09D 7/63; C09D 7/65;
C09D 115/00; C09D 183/04; D06M 13/513;
D06M 15/643; D06M 15/693**

(86) International application number:
**PCT/JP2023/002940**

(87) International publication number:
**WO 2023/145949 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.01.2022   JP 2022013698**

(71) Applicant: **NITTO DENKO CORPORATION
Ibaraki-shi
Osaka 567-8680 (JP)**

(72) Inventor: **EHARA Ryo
Ibaraki-shi, Osaka 567-8680 (JP)**

(74) Representative: **Gill Jennings & Every LLP
The Broadgate Tower
20 Primrose Street
London EC2A 2ES (GB)**

(54) **METHOD FOR PRODUCING FIBER PRODUCT, FIBER PRODUCT, AND ANTIFOULING PAINT
COMPOSITION**

(57)    The present invention relates to a method for producing a fiber product including: a step of applying an antifouling coating composition to a fiber base material and a step of drying and curing the antifouling coating composition, in which the antifouling coating composition contains a resin, a silicone oil, and a solvent, the resin contains at least one selected from a silicone resin and a rubber-based resin, and the antifouling coating composition contains 30% by mass or more of the solvent.

*FIG. 1*

EP 4 474 436 A1

**Description**

TECHNICAL FIELD

The present invention relates to a method for producing a fiber product, a fiber product, and an antifouling coating composition.

BACKGROUND ART

In a fiber product used underwater such as fishing nets and ropes, aquatic organisms such as barnacles, oysters, blue mussels, hydra, serpulas, sea squirts, bryozoans, sea lettuce, green laver, and attached diatoms may attach to and breed on parts that come into contact with water. In the fishing net, a mesh of the fishing net may be blocked by the attached aquatic organisms and a flow of seawater may become worse, large numbers of farmed fish may die due to lack of oxygen, or an infectious disease may occur and shipments may not be possible, which may cause major damage.

In the related art, in order to prevent the attachment of the aquatic organisms, a fishing net surface-treated with an antifouling coating composition in which a copper or non-copper antifouling agent is blended in a resin has been used. Due to concerns about the impact on the environment, in recent years, an antifouling coating composition containing a bleed-type antifouling component such as silicone oil has been used instead of a highly toxic antifouling agent such as a copper-based antifouling agent.

For example, Patent Literature 1 discloses an antifouling coating film formed from a silicone-based copolymer and an antifouling coating composition containing the copolymer as a vehicle, an underwater structure coated with the antifouling coating film, and a ship in which a surface of a ship base material is coated with the above-described antifouling coating film.

CITATION LIST

PATENT LITERATURE

Patent Literature 1: WO2011/074620

SUMMARY OF INVENTION

TECHNICAL PROBLEM

However, in an antifouling treatment product in the related art such as the fishing net which is subjected to an antifouling treatment by the antifouling coating composition disclosed in Patent Literature 1, the aquatic organisms may easily enter gaps between a plurality of filaments constituting the fishing net and may not be easily washed and removed.

The present invention has been completed in view of the above, and an object thereof is to provide a method for producing a fiber product having excellent cleanability, a fiber product, and an antifouling coating composition that can be suitably used for forming the fiber product.

SOLUTION TO PROBLEM

As a result of intensive studies, the inventors have found that the above technical problem can be solved by a method for producing a fiber product in which an antifouling coating composition having a specific composition is applied to a fiber base material and cured, and further by producing a fiber product that uniformly contains an antifouling coating material having a specific composition inside the fiber base material, and have completed the present invention.

That is, the present invention is as follows.

[1] A method for producing a fiber product including: a step of applying an antifouling coating composition to a fiber base material and a step of drying and curing the antifouling coating composition, in which the antifouling coating composition contains a resin, a silicone oil, and a solvent, the resin contains at least one selected from a silicone resin and a rubber-based resin, and the antifouling coating composition contains 30% by mass or more of the solvent.

[2] The method for producing a fiber product according to [1], in which a content of the silicone oil is 10 parts by mass to 150 parts by mass with respect to 100 parts by mass of the resin.

[3] The method for producing a fiber product according to [1] or [2], in which the silicone oil contains a hydrophilic silicone oil and a hydrophobic silicone oil.

[4] The method for producing a fiber product according to [3], in which a ratio of a content of the hydrophobic silicone oil to a content of the hydrophilic silicone oil (hydrophobic silicone oil content/hydrophilic oil content) is 0.5 to 10.

[5] The method for producing a fiber product according to [1] or [2], in which the antifouling coating composition further contains a crosslinking agent.

[6] The method for producing a fiber product according to [1] or [2], in which a water contact angle of a coating film formed by the antifouling coating composition is 70° or less.

[7] An antifouling coating composition including: a resin; a silicone oil; and a solvent, in which the resin contains at least one selected from a silicone resin and a rubber-based resin, and the antifouling coating composition contains 30% by mass or more of the solvent.

[8] The antifouling coating composition according to [7], in which a content of the silicone oil is 10 parts by mass to 150 parts by mass with respect to 100 parts by mass of the resin.

[9] The antifouling coating composition according to [7] or [8], in which the silicone oil contains a hydrophilic silicone oil and a hydrophobic silicone oil.

[10] The antifouling coating composition according to [9], in which a ratio of a content of the hydrophobic silicone oil to a content of the hydrophilic silicone oil (hydrophobic silicone oil content/hydrophilic oil content) is 0.5 to 10.

[11] The antifouling coating composition according to [7] or [8], further including: a crosslinking agent.

[12] The antifouling coating composition according to [7] or [8], in which a water contact angle of a coating film formed by the antifouling coating composition is 70° or less.

[13] A fiber product including:

a fiber base material; and
a cured product containing a resin and a silicone oil, in which
the fiber base material is formed by a fiber bundle including a plurality of filaments,
at least a part of the cured product exists inside the fiber base material,
the resin contains at least one selected from a silicone resin and a rubber-based resin, and
a standard deviation of a cured product area ratio obtained by the following test method is less than 1,
(Test Method)
The cured product existing on a surface of the fiber base material of the fiber product is removed to prepare a measurement sample. A cross-sectional area of the cured product and a cross-sectional area of the fiber product are measured at five locations in any cross-section of the fiber bundle in a direction perpendicular to a length direction, and the cured product area ratio is calculated using the following formula. Values obtained by excluding a maximum value and a minimum value of the obtained cured product area ratio are used to calculate the standard deviation,

Cured product area ratio (%) = [(cross-sectional area of cured product)/(cross-sectional area of fiber product)] $\times$ 100.

[14] The fiber product according to [13], in which a content of the silicone oil is 10 parts by mass to 150 parts by mass with respect to 100 parts by mass of the resin.

[15] The fiber product according to [13] or [14], in which the silicone oil contains a hydrophilic silicone oil and a hydrophobic silicone oil.

[16] The fiber product according to [15], in which a ratio of a content of the hydrophobic silicone oil to a content of the hydrophilic silicone oil (hydrophobic silicone oil content/hydrophilic oil content) is 0.5 to 10.

ADVANTAGEOUS EFFECTS OF INVENTION

According to the present invention, it is possible to provide a method for producing a fiber product having excellent cleanability, a fiber product, and an antifouling coating composition that can be suitably used for forming the fiber product.

BRIEF DESCRIPTION OF DRAWINGS

[FIG. 1] FIG. 1 is a cross-sectional photograph of a fiber product produced by a method for producing a fiber product according to an embodiment of the present invention.

[FIG. 2] FIG. 2 is a photograph taken from an upper part of a net surface of a fishing net before and after an immersion test in an antifouling property evaluation in Comparative Examples 1 and 2 and Example 1.

DESCRIPTION OF EMBODIMENTS

Hereinafter, an embodiment of the present invention will be described in detail. The present invention is not limited to the embodiment to be described below.

In the present specification, the term "inside of the fiber base material" refers to between fibers of a plurality of fibers (filaments) that implement a fiber base material, or inside a fiber. The term "fiber base material surface" refers to a part that can be visually observed in the appearance of the fiber base material other than the inside of the fiber base material.

<Method for Producing Fiber Product>

A method for producing a fiber product according to an embodiment of the present invention is a method for producing a fiber product including a first step of applying an antifouling coating composition to a fiber base material and a second step of drying and curing the antifouling coating composition, in which the antifouling coating composition contains a resin, a silicone oil, and a solvent, the resin contains at least one selected from a silicone resin and a rubber-based resin, and the antifouling coating composition contains 30% by mass or more of the solvent.

According to the method for producing a fiber product according to the embodiment of the present invention, a fiber product having excellent cleanability can be produced. Further, according to the method for producing a fiber product according to the embodiment of the present invention, a fiber product having a long duration time of antifouling effect can be produced.

The inventors presumed as follows as a mechanism by which the fiber product produced by the producing method according to the embodiment of the present invention has a long duration time of antifouling effect and is excellent in cleanability.

Generally, when the fiber base material is subjected to an antifouling treatment by the antifouling coating composition containing a bleed-type antifouling component such as silicone oil, a coating film containing the component is usually formed on the fiber base material surface from the viewpoint of function expression. However, since coating film peeling may occur in the antifouling coating film formed on the fiber base material surface relatively easily due to friction with, for example, seawater or floating objects in the water, it is difficult to reliably ensure that an antifouling property is maintained over a long time. In addition, since the aquatic organisms enter the inside of the fiber base material, it is difficult to easily remove the aquatic organisms, and a lot of labor is required for washing.

In the embodiment according to the present invention, the antifouling coating composition to be applied to the fiber base material surface is an antifouling coating composition having a specific composition. Accordingly, it is presumed that the antifouling coating composition is easily impregnated into the fiber base material. Specifically, by increasing an amount of the solvent in the antifouling coating composition to be used more than usual, the antifouling coating composition is easily impregnated into the fiber base material, and a fiber product containing a cured product of the antifouling coating composition can be formed inside the fiber base material. Therefore, the fiber product produced by the producing method according to the embodiment of the present invention is hardly affected by the coating film peeling in the water as described above and can ensure the antifouling property over a long time. In addition, since the aquatic organisms hardly enter the inside of the fiber base material, washing can be easily performed.

In the fiber product produced by the producing method according to the embodiment of the present invention, the cured product obtained by drying and curing the antifouling coating composition may or may not exist on the fiber base material surface as the coating film. Hereinafter, the cured product existing on the fiber base material surface may be referred to as the coating film.

The cured product in the fiber product preferably exists inside the fiber base material. Whether the cured product exists inside the fiber base material can be confirmed by methods of visually confirming and observing, by using an optical microscope, a cross-section of the fiber base material in a direction perpendicular to a length direction. A microtome or the like can be used for adjusting the cross-section of the observed cross-section.

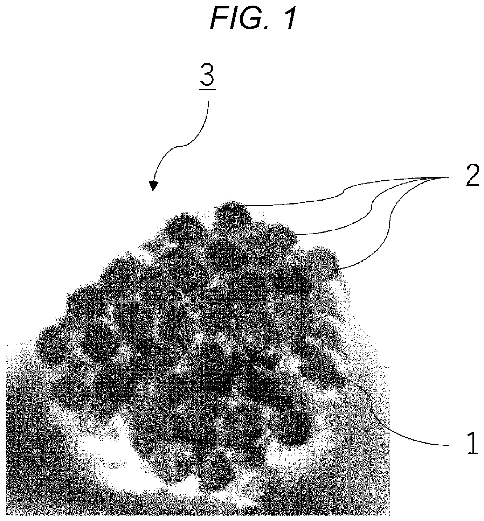

FIG. 1 is a cross-sectional photograph of a fiber product 3 produced by a producing method according to the embodiment of the present invention. FIG. 1 is a cross-sectional photograph of a twisted yarn forming a fishing net, which is a fiber base material of the fiber product 3 in the direction perpendicular to the length direction. In the fiber product 3, a cured product 1 exists in a gap between fibers 2, and it can be said that the cured product 1 exists inside the fiber base material.

A mass change rate (%) can be calculated based on a mass after applying the antifouling coating composition to the fiber base material, drying the fiber base material applied with the antifouling coating composition, and removing the coating film attached to the fiber product surface, a mass of the fiber base material before applying the antifouling coating composition, and a mass of the fiber product after applying the antifouling coating composition.

With the removal of the coating film attached to the fiber product surface, not only the fiber base material surface but also the cured product existing inside the fiber base material may be partially removed.

The mass change rate is a removal proportion of the cured product existing on the fiber base material surface and inside the fiber base material, and indicates that the larger the mass change rate is, the higher the removal rate of the cured product formed from the antifouling coating composition inside the fishing net (fiber base material).

The mass change rate is preferably 30% by mass or less, more preferably 15% by mass or less, and further preferably 5% by mass or less from the viewpoint of prolonging the duration time of the antifouling effect and ease of cleanability.

That is, the removal rate of the cured product formed by the antifouling coating composition in the fishing net (fiber base material) is preferably 30% by mass or less.

The removal proportion of the cured product existing on the fiber base material surface and inside the fiber base material can be determined by a method described in "mass change rate after coating film removal" in the Example to be described later.

[Fiber Base Material]

The fiber base material used in the method for producing the fiber product according to the embodiment of the present invention is not particularly limited as long as it is a fiber base material that can be used underwater and is preferably a fiber base material formed by a plurality of filaments.

A shape of the fiber base material is not particularly limited and may be, for example, a thread, a rope, a cable, a net, a fishing gear such as a fishing net, and fabrics such as woven fabrics, knitted fabrics, and non-woven fabrics. The fiber base material used in the method for producing the fiber product according to the embodiment of the present invention is preferably a fishing net.

A material of the fiber base material is not particularly limited, and examples thereof include synthetic fibers such as polyethylene, polyester, nylon, and carbon, natural fibers such as cotton and hemp, metal fibers such as iron, copper, and styrene, and composite fibers obtained by combining these fibers.

The fiber base material is preferably formed by a fiber bundle containing a plurality of filaments, and the number of filaments is, for example, 3 to 100, and may be 10 to 50.

The filaments forming the fiber base material may be, for example, 100 deniers to 700 deniers, and may be 200 deniers to 600 deniers.

The fiber bundle forming the fiber base material may be formed by twisting together the plurality of filaments or may be formed by gathering together the plurality of filaments without being twisted. Further, the fiber bundle may be formed by twisting a plurality of multifilaments made of the plurality of filaments or may be formed by gathering together the plurality of multifilaments without being twisted.

[Antifouling Coating Composition]

The antifouling coating composition used in the embodiment of the present invention contains the resin, the silicone oil, and the solvent, the resin contains at least one selected from the silicone resin and the rubber-based resin, and the antifouling coating composition contains 30% by mass or more of the solvent. The antifouling coating composition used in the embodiment of the present invention may be hereinafter simply referred to as an antifouling coating composition.

Generally, when the antifouling coating film is formed by applying the antifouling coating composition to the fiber base material used underwater such as a fishing net, the solvent has a low content to efficiently form a desired coating film. In this case, the antifouling coating composition hardly permeates into the fiber base material, and the coating film is formed on the fiber base material surface. On the other hand, in the present invention, since a content of the solvent in the antifouling coating composition is 30% by mass or more and is larger than usual, the antifouling coating composition easily permeates into the inside of the fiber base material, and the fiber product containing the cured product of the antifouling coating composition can be formed inside the fiber base material. The present invention also relates to the antifouling coating composition.

[Resin]

The antifouling coating composition according to the embodiment of the present invention contains a resin. Examples of the resin include the silicone resin and the rubber-based resin, preferably include at least one selected from the silicone resin and the rubber-based resin, and more preferably include the silicone resin from the viewpoint of antifouling property. From the viewpoint of storage stability, the resin is preferably a silicone resin.

(Silicone Resin)

The silicone resin is preferably a cured reaction product of an organopolysiloxane having a curing reactive group. In the present specification, the silicone resin before a curing reaction may be referred to as a silicone resin for convenience.

In the silicone resin, a proportion of structural units having siloxane bonds with respect to a total (100% by mass) of all structural units forming the silicone resin is preferably 40% by mass to 100% by mass, more preferably 50 % by mass to 100% by mass, further preferably 60 % by mass to 100% by mass, and particularly preferably 80 % by mass to 100% by mass. It is preferable that a main chain of the silicone resin is formed only of siloxane bonds.

Examples of the curing reactive group contained by the organopolysiloxane may include a hydroxyl group, an alkoxy group having 1 to 8 carbon atoms, a vinyl group, and a (meth)acryl group. Examples of the hydrolyzable group other than a hydroxyl group, that can be use include: an alkoxy group such as methoxy group, ethoxy group, or propoxy group; an alkoxyalkoxy group such as methoxyethoxy group, ethoxyethoxy group, or methoxypropoxy group; an acyloxy group such as acetoxy group, octanonyloxy group, or benzoyloxy group; an alkenyloxy group such as vinyloxy group, isopropenyloxy group, or 1-ethyl-2-methylvivnyloxy group; a ketoxime group such as dimethyl ketoxime group, methyl ethyl ketoxime group, or diethyl ketoxime group; an amino group such as dimethylamino group, diethylamino group, butylamino group, or cyclohexylamino group; an aminoxy group such as dimethylaminoxy group or diethylaminoxy group; and an amide group such as N-methylacetamide group, N-ethylacetamide group, or N-methylbenzamide group.

The silicone resin may be of only one kind or of two or more kinds. Such a silicone resin (silicone resin before the curing reaction) may be a liquid silicone resin at room temperature or a solid silicone resin at room temperature. Such a silicone resin may be a condensation-type silicone resin or an addition-type silicone resin. Such a silicone resin may be a one-component silicone resin that is dried alone or may be a two-component silicone resin that is blended with a curing agent.

In the present embodiment, the silicone resin is preferably a one-component silicone resin, more preferably a one-component addition-type silicone resin and a one-component condensation-type silicone resin. Examples of such a one-component addition-type silicone resin include KE-1820, KE-1825, KE-1830, KE-1831, KE-1833, KE-1842, KE-1862, KE-1867, KE-1884, KE-1885, KE-1886, and KE-1891 manufactured by Shin-Etsu Chemical Co., Ltd. Examples of such a one-component condensation-type silicone resin include KE-40RTV, KE-41, KE-42, KE-44, KE-45, KE-45-S, KE-347, KE-348, KE-441, KE-445, KE-3417, KE-3418, KE-3427, KE-3428, KE-3479, KE-3479, KE-3491, KE-3492, KE-4464, KE-4890, KE-4895, KE-4896, KE-4897, and KE-4898. Examples of the two-component addition-type silicone resin include KE-1935 (A/B), KE-1950-10 (A/B), KE-1950-20 (A/B), KE-1950-30 (A/B), KE-1950-35 (A/B), KE-1950-40 (A/B), KE-1950-50 (A/B), KE-1950-60 (A/B), KE-1950-70 (A/B), KE-1987 (A/B), and KE-1988 (A/B) manufactured by Shin-Etsu Chemical Co., Ltd., LR7665 series and LR3033 series manufactured by Wacker Asahikasei Silicone Co., Ltd., and TSE3032 series and LSR series manufactured by Momentive Performance Co., Ltd. Examples of the two-component condensation-type silicone resin include KE108, KE118, KE12, KE17, and KE1417 manufactured by Shin-Etsu Chemical Co., Ltd.

(Rubber-Based Resin)

As the rubber-based resin, for example, a rubber (thermosetting elastomer) and a thermoplastic elastomer can be used.

Examples of the rubber that can be used include acryl rubber, diene rubber, butyl rubber, nitrile rubber, hydrogenated nitrile rubber, fluororubber, silicone rubber, ethylene-propylene rubber, chloroprene rubber, urethane rubber, and epichlorohydrin rubber. Acryl rubber and diene rubber are particularly preferably used. Examples of the diene rubber that can be used include natural rubber, isoprene rubber, butadiene rubber, styrene-butadiene rubber, chloroprene rubber, and acrylonitrile butadiene rubber. Styrene-butadiene rubber is preferably used.

Examples of the thermoplastic elastomer that can be used include monovinyl-substituent aromatic compound-based thermoplastic elastomers such as an acrylic thermoplastic elastomer and a styrene-based thermoplastic elastomer. The styrene-based thermoplastic elastomer is preferably used.

Examples of the acrylic thermoplastic elastomer include a block copolymer of polymethyl methacrylate (PMMA) and acrylic acid alkyl ester. Examples of the acrylic acid alkyl ester include butyl acrylate, 2-ethylhexyl acrylate, and octyl acrylate.

Examples of the styrene-based thermoplastic elastomer that can be used include a styrene-butadiene block copolymer (SBS), a styrene-isoprene block copolymer (SIS), a styrene-ethylene-butylene-styrene block copolymer (SEBS), a styrene-ethylene-propylene-styrene block copolymer (SEPS), and a styrene-ethylene-ethylene-propylene-styrene block copolymer (SEEPS).

When the thermoplastic elastomer is a styrene-based thermoplastic elastomer, tensile break strength and an adhesive force can be adjusted by adjusting a styrene content proportion in the elastomer, which is preferably 20% by mass to 40% by mass, more preferably 22% by mass to 35% by mass, and further preferably 25% by mass to 33% by mass.

The hardness of the resin measured by a durometer of type A described in JIS K 6253 "hardness test method of vulcanized rubber and thermoplastic rubber" is preferably 50 or less, more preferably 40 or less, and further preferably 35 or less, from the viewpoint of prolonging a duration time of antifouling performance and improving the cleanability of the obtained fiber product. The hardness may be 20 or more, preferably 30 or more, more preferably 32 or more, and further preferably 34 or more. The hardness can be appropriately selected depending on the use of the fiber product and is preferably 32 or more when the fiber product is a fishing net to ensure the strength and the performance of the fishing net.

From the viewpoint of increasing the strength of the fiber product, cutting elongation of the resin is preferably 90 or more, more preferably 150 or more, and further preferably 200 or more.

From the viewpoint of increasing the strength of the fiber product of the resin, tensile strength is preferably 1 or more, more preferably 1.5 or more, and further preferably 2.0 or more.

The cutting elongation and the tensile strength of the resin can be measured according to JIS K 6251.

From the viewpoint of keeping the tensile strength and the cutting elongation of the resin within the ranges described above, a weight average molecular weight (Mw) by GPC before curing the resin is preferably 10000 or more, more preferably 30000 or more, still more preferably 40000 or more, and particularly preferably 60000 or more. The weight average molecular weight (Mw) may be 200000 or less or may be 100000 or less.

The weight average molecular weight (Mw) of the resin can be measured by the following measurement method.

(Measurement Method)

The measurement was performed by gel permeation chromatography (GPC). The measurement was performed using ACQUITY APC manufactured by Waters as a GPC device and PLGEL MIXED-C and Mixed-E manufactured by AGILENT as a column. Toluene was used as a measurement solvent, and a column temperature was 40°C. A sample concentration was set to 0.2% by mass, and 100 microliters of the sample was injected and measured. A calibration curve of molecular weight is implemented using a polystyrene sample having a molecular weight known by a universal calibration method.

From the above viewpoint, as the resin, for example, KE-4464, KE-108, and KE-118 are preferably used, and KE-4464 is particularly preferably used.

In the antifouling coating composition, a content proportion of the resin in the material excluding the solvent is preferably 30% by mass or more, more preferably 35% by mass or more, further preferably 40% by mass or more, and particularly preferably 50% by mass or more. An upper limit is preferably 85% by mass or less, more preferably 80% by mass or less, and further preferably 75% by mass or less.

[Silicone Oil]

Examples of the silicone oil that is contained in the antifouling coating composition according to the embodiment of the present invention and that can be used include: dimethyl silicone oil in which all groups are methyl group; methylphenyl silicone oil in which a part of methyl groups in the dimethyl silicone oil is substituted with phenyl group; an amino-modified silicone oil substituted with monoamine, diamine, or amino-polyether group; an epoxy-modified silicone oil substituted with epoxy, alicyclic epoxy, epoxy-polyether or epoxy-aralkyl group; a carbinol-modified silicone oil substituted with carbinol group; a mercapto-modified silicone oil substituted with mercapto group; a carboxyl-modified silicone oil substituted with carboxy group; a methacryl-modified silicone oil substituted with methacryl group; a polyether-modified silicone oil substituted with polyether; a long chain alkyl-modified silicone oil substituted with long chain alkyl or long chain alkyl-aralkyl group; a higher fatty acid-modified silicone oil substituted with higher fatty acid ester group; and a fluoroalkyl-modified silicone oil substituted with fluoroalkyl group. The silicone oil may be used in one kind alone, or plural kinds of silicone oils may be used. The silicone oil preferably contains a hydrophilic silicone oil and may further contain a hydrophobic silicone oil.

The silicone oil contained in the antifouling coating composition according to the embodiment of the present invention preferably contains the hydrophilic silicone oil and the hydrophobic silicone oil.

In the embodiment of the present invention, the hydrophilic silicone oil is a silicone oil whose HLB is 1 or more, and the hydrophobic silicone oil is a silicone oil whose HLB is less than 1.

The HLB can be specifically obtained by, for example, the following formula.

$$\text{HLB value} = (\text{total of \% by mass values of hydrophilic group (oxyethylene unit, OH group) in molecule})/5$$

The hydrophilic silicone oil is preferably a polyether-modified silicone oil.

The polyether-modified silicone oil is a polysiloxane whose main chain contains a siloxane bond, and has one or more polyoxyalkylene groups as a substituent. The main chain may form a ring.

Bonding sites of the polyoxyalkylene group in the polyether-modified silicone oil can be any appropriate bonding site. For example, the polyoxyalkylene group may be bonded to both ends of the main chain, the polyoxyalkylene group may be bonded to one end of the main chain, and the polyoxyalkylene group may be bonded to a side chain.

The polyether-modified silicone oil has an HLB of preferably 3 to 15 and more preferably 3 to 10. When the HLB of the polyether-modified silicone oil falls within the above ranges, the antifouling effect of the antifouling coating composition can be more sufficiently exhibited, and the attachment of aquatic organisms such as algae can be more effectively prevented over a long time. The HLB is hydrophilic-lipophilic balance that numerically indicates a balance between hydrophilicity and lipophilicity of oil, and is an abbreviation for value of hydrophile and liophile balance. The HLB of the polyether-modified silicone oil can be controlled by, for example, selection of a chain length of a polyether polyoxyalkylene chain (group) and a dimethylsiloxane chain (group), and selection of respective chain lengths of hydrophilic polyethylene oxide and hydrophobic as compared with the hydrophilic polypropylene oxide in the polyether polyoxyalkylene chain (group).

Examples of the polyether-modified silicone oil include side chain type (linear type) polyether-modified silicone oils such as trade names "KF-6011" (HLB: 14.5), "KF-6011P" (HLB: 14.5), "KF-6012" (HLB: 7.0), "KF-6013" (HLB: 10.0), "KF-6015" (HLB: 4.5), "KF-6016" (HLB: 4.5), "KF-6017" (HLB: 4.5), "KF-6017P" (HLB: 4.5), "KF-6043" (HLB: 14.5), "KF-6004" (HLB: 9.0), "KF351A", "KF352A", "KF353", "KF354L", "KF355A", "KF615A", "KF945", "KF-640", "KF-642", "KF-643", "KF-644", "KF-6020", "KF-6204", and "X22-4515" manufactured by Shin-Etsu Silicone Co., Ltd., side chain type (branched-chain type) polyether-modified silicone oils such as trade names "KF-6028" (HLB: 4.0) and "KF-6028P" (HLB: 4.0) manufactured by Shin-Etsu Silicone Co., Ltd., and side chain type (branched-chain type, alkyl-modified type) polyether-modified silicone oils such as trade name "KF-6038" (HLB: 3.0) manufactured by Shin-Etsu Silicone Co., Ltd.

Examples of the hydrophobic silicone oil include non-reactive silicone oils such as polysiloxane whose main chain contains a siloxane bond, the hydrophobic silicone oil may contain a substituent, and the main chain may form a ring. Examples thereof include a straight silicone oil and a modified silicone oil (excluding polyether-modified silicone oil). A substituent in the straight silicone oil is preferably an alkyl group and a phenyl group.

Specific examples thereof include a terminal hydroxyl group-containing dimethyl silicone oil in which both ends or one end of a polysiloxane are a hydroxyl group, a dimethyl silicone oil in which all substituents bonded to Si of a polysiloxane is a methyl group, a phenyl methyl silicone oil (phenyl-modified silicone oil) in which a part of methyl groups of the dimethyl silicone oils is substituted with a phenyl group), and a long chain alkyl-modified silicone oil.

Examples of the hydrophobic silicone oil include trade names "KF96L", "KF96", "KF69", "KF99", "KF50", "KF54", "KF410", "KF412", "KF414", "KF415", "FL", "KF-6104", and "KF-6100" manufactured by Shin-Etsu Silicone Co., Ltd., and trade names "BY16-846", "SF8416", "SH200", "SH203", "SH230", "SF8419", "FS1265", "SH510", "SH550", "SH710", "FZ-2110", and "FZ-2203" manufactured by Dow Coming Toray Co., Ltd.

The antifouling coating composition preferably contains the hydrophilic silicone oil and the hydrophobic silicone oil as the silicone oil.

When the hydrophobic silicone oil and the hydrophilic silicone oil are used in combination, a blending proportion of the hydrophobic silicone oil and the hydrophilic silicone oil is not particularly limited, and a ratio of a content of the hydrophobic silicone oil to a content of the hydrophilic silicone oil (hydrophobic silicone oil content/hydrophilic oil content) is more preferably 0.1 or more, and further preferably 0.5 or more, even more preferably 1.0 or more, and particularly preferably 2.0 or more. Further, the ratio is preferably 10 or less, more preferably 5 or less, further preferably 3 or less, and even more preferably 2.5 or less. The ratio of the content of the hydrophobic silicone oil to the content of the hydrophilic silicone oil (hydrophobic silicone oil content/hydrophilic oil content) is preferably 0.5 to 10.

When the blending proportion of the hydrophobic silicone oil and the hydrophilic silicone oil is in the above range, the antifouling effect of the antifouling coating composition can be more sufficiently exhibited, and the attachment of aquatic organisms such as algae can be more effectively prevented over a long time.

A content of the silicone oil with respect to 100 parts by mass of the resin in the antifouling coating composition is preferably 10 parts by mass to 150 parts by mass, more preferably 20 parts by mass to 140 parts by mass, even more preferably 20 parts by mass to 100 parts by mass, particularly preferably 24 parts by mass to 80 parts by mass, 30 parts by mass to 80 parts by mass, 35 parts by mass to 80 parts by mass, 50 parts by mass to 80 parts by mass, and may further be 60 parts by mass to 80 parts by mass. When the content of the silicone oil with respect to 100 parts by mass of the resin is adjusted within the above range, the antifouling effect of the antifouling coating composition can be more sufficiently exhibited.

[Solvent]

Examples of the solvent that is contained in the antifouling coating composition and that can be used include aromatic hydrocarbons such as benzene, toluene, xylene, ethylbenzene, and trimethylbenzene, aliphatic hydrocarbons such as hexane and heptane, esters such as ethyl acetate and vinyl acetate, ethers such as dioxane and diethyl ether, alcohols such as ethanol, isopropanol, and n-butanol, ketones such as acetone, diethyl ketone, and methyl isobutyl ketone, and water. The solvent may be one kind alone or may be two or more kinds.

A content proportion of the solvent in the antifouling coating composition is 30% by mass or more, preferably 40% by mass or more, more preferably 50% by mass or more, and further preferably 60% by mass or more from a viewpoint of ensuring permeability of the antifouling coating composition into the fiber base material. An upper limit is, for example, preferably 90% by mass or less and more preferably 85% by mass or less from a viewpoint of efficiently applying the antifouling component to the fiber base material.

[Crosslinking Agent]

The antifouling coating composition according to the embodiment of the present invention may further contain a crosslinking agent from a viewpoint of improving the strength of the cured product. In the cured product, the crosslinking agent preferably reacts with the above-described resin to form a crosslinked structure.

Examples of the crosslinking agent include an organosilicon crosslinking agent. Particularly, in a case of containing the silicone resin as the resin, it is preferable to contain the organosilicon crosslinking agent as the crosslinking agent.

The organosilicon crosslinking agent is a compound having a silicon atom and two or more hydrolyzable groups. As the hydrolyzable groups, an alkoxy group and an oxime group are preferred, and an alkoxy group is preferred.

As the organosilicon crosslinking agent, for example, tetra-, tri-, and di-functional alkoxysilanes and condensates of these alkoxysilanes can be used. The tri- and di-functional alkoxysilanes may be generally called silane coupling agents. Specific examples of the tetra-functional alkoxy silane include tetramethoxysilane, tetraethoxy silane, and tetrapropoxysilane. Specific examples of the tri-functional alkoxysilane include methyltrimethoxysilane, methyltriethoxysilane, phenyltrimethoxysilane, phenyltriethoxysilane, vinyltrimethoxysilane, vinyltriethoxysilane, methacryloxypropyltrimethoxysilane, glycidopropoxytrimethoxysilane, glyciropropylmethyldiethoxy silane, aminopropyltriethoxysilane, aminoethylaminopropyltrimethoxysilane, and mercaptopropyltrimethoxysilane. Specific examples of the di-functional alkoxysilane include dimethyldimethoxysilane, dimethyldiethoxysilane, diphenyldimethoxysilane, and diphenyldiethoxysilane. Examples of the condensate of alkoxy silane include condensates of tetra-functional alkoxysilanes such as ethyl silicate 40, ethyl silicate 48, and methyl silicate 51. Among these silica compounds, in particular, tetramethoxysilane, tetraethoxysilane, ethyl silicate 40, ethyl silicate 48, and methyl silicate 51 are particularly preferable.

A content of the crosslinking agent when the antifouling coating composition according to the embodiment of the present invention contains the crosslinking agent is preferably 1.5 parts by mass to 30 parts by mass, and more preferably 2 parts by mass to 15 parts by mass with respect to 100 parts by mass of the resin.

[Other Components]

The antifouling coating composition according to the embodiment of the present invention may contain any other appropriate additives as long as the effects of the present invention are not impaired. As such other additives, various components used in general coating compositions can be blended, such as UV absorbers, antifouling agents, plastic resins, surface conditioners, modifiers, coloring pigments, extender pigments, other coating film forming components, and solvents as weathering agents.

Examples of the antifouling agent that can be used include at least one selected from the group consisting of zinc oxide, cuprous oxide, manganese ethylene bisdithiocarbamate, zinc dimethyl dithiocarbamate, N,N-dimethyldichlorophenylurea, zinc ethylene bisdithiocarbamate, N-(fluorodichloromethylthio)phthalimide, metal salts such as 2-pyridinethiol-1-oxide zinc salt (zinc pyrithione) and copper salts (copper pyrithione), 3-Iodo-2-propylbutylcarbamate, diiodomethyl paratrisulfone, phenyl (bispyridyl) bismuth dichloride, 2-(4-thiazolyl)-benzimidazole, triphenylboron pyridine salts, steallylamine-triphenylboron, laurylamine-triphenylboron, bisdimethyldithiocarbamoyl zinc ethylene bisdithiocarbamate, 1,1-dichloro-N-[(dimethylamino)sulfonyl]-1-fluoro-N-phenylmethanesulfenamide, 1,1-dichloro-N-[(dimethylamino)sulfonyl]-1-fluoro-N-(4-methylphenyl)methanesulfenamide, N'-(3,4-dichlorophenyl)-N,N'-dimethylurea, N'-tert-butyl-N-cyclopropyl-6-(methylthio)-1,3,5-triazine-2,4-diamine, and 4-bromo-2-(4-chlorophenyl)-5-(trifluoromethyl)-1H-pyrrole-3-carbonitrile.

The antifouling coating composition according to the embodiment of the present invention may contain the above additive, and it may be better not to contain the additive depending on the type of the additive from the viewpoint of reducing the environmental load depending on the applications of the antifouling coating composition. For example, the above-described antifouling agent is preferably not contained from the viewpoint of reducing the environmental load.

In the antifouling coating composition according to the embodiment of the present invention, a water contact angle of the coating film formed by the antifouling coating composition is preferably 70° or less, more preferably 60° or less, and further preferably 55° or less from the viewpoint of achieving excellent antifouling property and ease of cleanability. A lower limit value of the water contact angle of the coating film is not particularly limited as long as the water contact angle is 0° or more, and may be 10° or more, 20° or more, or 25° or more.

The water contact angle of the coating film formed by the antifouling coating composition according to the embodiment of the present invention is obtained by applying, with an applicator, the antifouling coating composition to a surface of a PET film (product name "Lumirror", manufactured by Toray Industries, Inc.) having a length of 30 cm, a width of 25 cm, and a thickness of 0.75 cm, drying the PET film, and forming a coating film having a thickness of 100 μm to prepare a measurement sample, dropping 2 μl of water on the surface of the coating film, and measuring the water contact angle of the surface of the coating film after 5 minutes using a contact angle meter (DropMaster, manufactured by Kyowa Interface Science Co., Ltd.) with a sessile drop method according to JIS R3257.

[First Step]

A method for producing a fiber product according to the embodiment of the present invention includes a first step of applying the antifouling coating composition to the fiber base material.

The applying of the antifouling coating composition to the fiber base material can be performed by a general method, and examples thereof include a brush coating method, a spray method, an immersion method, a flow coating method, and a spin coating method. Of these, the immersion method is preferred.

[Step 2]

The method for producing a fiber product according to the embodiment of the present invention includes a second step of drying and curing the antifouling coating composition after the first step. A drying temperature is not particularly limited and is preferably 5°C or higher, and more preferably 10°C or higher. A drying time may be appropriately set depending on an attachment amount of the antifouling coating composition and is not particularly limited, but is preferably 16 hours or more, and more preferably 24 hours or more.

According to the producing method of the embodiment of the present invention, a fiber product can be produced. It is preferable that the fiber product is a fiber product containing the fiber base material and the cured product of the antifouling coating composition containing the resin and the silicone oil, and is a fiber product in which the resin includes at least one selected from the silicone resin and the rubber-based resin, and the cured product of the antifouling coating composition exists inside the fiber base material.

<Fiber Product>

The fiber product according to the embodiment of the present invention is a fiber product containing:

    the fiber base material; and
    the cured product containing the resin and the silicone oil, in which
    the fiber base material is formed by a fiber bundle including a plurality of filaments,
    at least a part of the cured product exists inside the fiber base material,
    the resin contains at least one selected from the silicone resin and the rubber-based resin, and
    a standard deviation of a coating material area ratio obtained by the following test method is less than 1.

(Test Method)

The cured product existing on a surface of the fiber base material of the fiber product is removed to prepare a measurement sample. A cross-sectional area of the cured product and a cross-sectional area of the fiber product are measured at five locations in any cross-section of the fiber bundle in a direction perpendicular to a length direction, and the cured product area ratio is calculated using the following formula. Values obtained by excluding a maximum value and a minimum value of the obtained cured product area ratio are used to calculate the standard deviation.

Cured product area ratio (%) = [(cross-sectional area of cured product)/(cross-sectional area of fiber product)] × 100

In the fiber product according to the embodiment of the present invention, at least a part of the cured product exists inside the fiber base material, and the standard deviation of the cured product area ratio obtained by the above-described test method is less than 1. When the standard deviation is less than 1, since the cured product uniformly exists inside the fiber base material, it is less susceptible to the effects of the coating film peeling underwater, and the antifouling property can be ensured over a long time. In addition, since the aquatic organisms hardly enter the inside of the fiber base material, washing can be easily performed.

The standard deviation of the cured product area ratio obtained by the above-described test method is less than 1, and is preferably 0.8 or less, more preferably 0.6 or less, and further preferably 0.4 or less from the viewpoint of prolonging the duration time of the antifouling effect and ease of cleanability.

In the test method, the cured product existing on the fiber base material surface may be removed by rubbing with a finger. The cross-sectional area of the cured product and the cross-sectional area of the fiber product in a cross-section (transverse cross-section) in the direction perpendicular to the length direction of the fiber bundle can be obtained by, for example, preparing a cross-sectional sample using a microtome and analyzing an observation image of the cross-section by the optical microscope.

Here, the cross-sectional area of the fiber product is an area of a region surrounded by an outer peripheral portion of the fiber product after the coating film is removed in the cross-sectional sample, and is obtained as an area including voids even when the region includes the voids. The cross-sectional area of the cured product is a total area of portions where the cured product is confirmed by an image analysis in the region surrounded by the outer peripheral portion of the cross-sectional sample of the fiber product after the coating film is removed.

When the fiber product is a fishing net, a cross-sectional area of each transverse cross-section of the twisted yarn forming the fishing net may be determined. Specifically, the cross-sectional area can be obtained by a method described in "coating material area ratio" in Examples to be described later.

In the fiber product according to the embodiment of the present invention, the cured product may or may not exist on the fiber base material surface as the coating film.

Further, the fiber product according to another embodiment of the present invention is a fiber product containing:

the fiber base material; and
the cured product containing the resin and the silicone oil, in which
the fiber base material is formed by a fiber bundle including a plurality of filaments,
at least a part of the cured product exists inside the fiber base material,
the resin contains at least one selected from the silicone resin and the rubber-based resin, and has a hardness of 32 or more measured by a type A durometer described in JIS K 6253 "hardness test method of vulcanized rubber and thermoplastic rubber".

The fiber product according to the embodiment of the present invention can be suitably produced by the method for producing a fiber product according to the embodiment of the present invention described above. That is, the cured product containing the resin and the silicone oil in the fiber product according to the embodiment of the present invention is preferably the cured product of the antifouling coating composition according to the embodiment of the present invention.

The fiber base material in the fiber product according to the embodiment of the present invention is formed by the fiber bundle including a plurality of filaments. As the fiber base material, the description of the fiber base material in the method for producing the fiber product according to the embodiment of the present invention described above can be applied as it is.

As the resin and the silicone oil contained in the cured product in the fiber product according to the embodiment of the present invention, the descriptions of the resin and the silicone oil in the antifouling coating composition according to the embodiment of the present invention can be applied as it is.

That is, the content of the silicone oil with respect to 100 parts by mass of the resin is preferably 10 parts by mass to 150 parts by mass.

The silicone oil preferably contains the hydrophilic silicone oil and the hydrophobic silicone oil.

The ratio of the content of the hydrophobic silicone oil to the content of the hydrophilic silicone oil (hydrophobic silicone oil content/hydrophilic oil content) is preferably 0.5 to 10.

In the fiber product according to the embodiment of the present invention, the cured product may contain the crosslinked structure from the viewpoint of improving strength.

The cured product in the fiber product according to the embodiment of the present invention may contain any other appropriate additive as long as the effects of the present invention are not impaired, and may contain other components in the antifouling coating composition according to the embodiment of the present invention.

In the cured product in the fiber product according to the embodiment of the present invention, the water contact angle is preferably 70° or less, more preferably 60° or less, and further preferably 55° or less from the viewpoint of achieving excellent antifouling property and ease of cleanability. The lower limit value of the water contact angle of the coating film is not particularly limited as long as the water contact angle is 0° or more, and may be 10° or more, 20° or more, or 25° or more.

The water contact angle of the cured product is obtained by applying, with an applicator, an antifouling coating formation composition to a surface of a PET film (product name "Lumirror", manufactured by Toray Industries, Inc.) having a length of 30 cm, a width of 25 cm, and a thickness of 0.75 cm, drying the PET film, and forming a coating film having a thickness of 100 μm to prepare a measurement sample, dropping 2 μl of water on the surface of the coating film, and measuring the water contact angle of the surface of the coating film after 5 minutes using a contact angle meter (DropMaster, manufactured by Kyowa Interface Science Co., Ltd.) with a sessile drop method according to JIS R3257.

The fiber product and the method for producing a fiber product according to the embodiment of the present invention are suitably used as, for example, yarns used in underwater structures, ropes, cables, nets, fishing gears such as fishing nets and fish preserves, and fabrics such as woven fabrics, knitted fabrics, and non-woven fabrics, and manufacturing methods thereof.

The antifouling coating composition according to the embodiment of the present invention is used, for example, as an antifouling coating film that prevents aquatic life from attaching to and breeding on yarns used in underwater structures, ropes, cables, nets, fishing gears such as fishing nets and fish preserves, and fabrics such as woven fabrics, knitted fabrics, and non-woven fabrics.

Examples of the underwater structure include a ship, a buoy, harbor facilities, offshore oilfield equipment, a passage for plant power cooling water, a floating passage, a water gate, an underwater sensor, an underwater camera, an underwater light, an underwater pump, an underwater piping, underwater power generation facilities (for example, a tidal power generation equipment, an ocean current power generation equipment, a wave-activated power generation equipment, and an offshore wind power generation equipment), an underwater rotating body such as a propeller, and various underwater mooring equipment such as an underwater wire.

The fiber product according to the embodiment of the present invention described above may be a fiber product other than the fiber product in the underwater structure. Further, the method for producing a fiber product and the antifouling coating composition according to the embodiment of the present invention may be used for a fiber product other than the fiber product in the underwater structures, and the same effects can be achieved. For example, the antifouling coating composition may be used on surfaces of various exterior materials such as a roof and an outer wall.

As described above, the following matters are disclosed in the present specification.

[1] A method for producing a fiber product including: a step of applying an antifouling coating composition to a fiber base material and a step of drying and curing the antifouling coating composition, in which the antifouling coating composition contains a resin, a silicone oil, and a solvent, the resin contains at least one selected from a silicone resin and a rubber-based resin, and the antifouling coating composition contains 30% by mass or more of the solvent.

[2] The method for producing a fiber product according to [1], in which a content of the silicone oil is 10 parts by mass to 150 parts by mass with respect to 100 parts by mass of the resin.

[3] The method for producing a fiber product according to [1] or [2], in which the silicone oil contains a hydrophilic silicone oil and a hydrophobic silicone oil.

[4] The method for producing a fiber product according to [3], in which a ratio of a content of the hydrophobic silicone oil to a content of the hydrophilic silicone oil (hydrophobic silicone oil content/hydrophilic oil content) is 0.5 to 10.

[5] The method for producing a fiber product according to any one of [1] to [4], in which the antifouling coating composition further contains a crosslinking agent.

[6] The method for producing a fiber product according to any one of [1] to [5], in which a water contact angle of a coating film formed by the antifouling coating composition is 70° or less.

[7] An antifouling coating composition including: a resin; a silicone oil; and a solvent, in which the resin contains at least one selected from a silicone resin and a rubber-based resin, and the antifouling coating composition contains 30% by mass or more of the solvent.

[8] The antifouling coating composition according to [7], in which a content of the silicone oil is 10 parts by mass to 150 parts by mass with respect to 100 parts by mass of the resin.

[9] The antifouling coating composition according to [7] or [8], in which the silicone oil contains a hydrophilic silicone oil and a hydrophobic silicone oil.

[10] The antifouling coating composition according to [9], in which a ratio of a content of the hydrophobic silicone oil to a content of the hydrophilic silicone oil (hydrophobic silicone oil content/hydrophilic oil content) is 0.5 to 10.

[11] The antifouling coating composition according to any one of [7] to [10], further including: a crosslinking agent.

[12] The antifouling coating composition according to any one of [7] to [11], in which a water contact angle of a coating film formed by the antifouling coating composition is 70° or less.

[13] A fiber product including:

a fiber base material; and
a cured product containing a resin and a silicone oil, in which
the fiber base material is formed by a fiber bundle including a plurality of filaments,
at least a part of the cured product exists inside the fiber base material,
the resin contains at least one selected from a silicone resin and a rubber-based resin, and
a standard deviation of a cured product area ratio obtained by the following test method is less than 1,
(Test Method)
The cured product existing on a surface of the fiber base material of the fiber product is removed to prepare a measurement sample. A cross-sectional area of the cured product and a cross-sectional area of the fiber product are measured at five locations in any cross-section of the fiber bundle in a direction perpendicular to a length direction, and the cured product area ratio is calculated using the following formula. A standard deviation is calculated using a value obtained by subtracting the maximum value and the minimum value of the obtained cured product area ratio, Cured product area ratio (%) = [(cross-sectional area of cured product)/(cross-sectional area of fiber product)] × 100.

[14] The fiber product according to [13], in which a content of the silicone oil is 10 parts by mass to 150 parts by mass with respect to 100 parts by mass of the resin.

[15] The fiber product according to [13] or [14], in which the silicone oil contains a hydrophilic silicone oil and a hydrophobic silicone oil.

[16] The fiber product according to [15], in which a ratio of a content of the hydrophobic silicone oil to a content of the hydrophilic silicone oil (hydrophobic silicone oil content/hydrophilic oil content) is 0.5 to 10.

EXAMPLES

The present invention is specifically described below by reference to Examples, but the present invention is not construed as being limited to those Examples.

[Example 1]

(Preparation of Antifouling Coating Composition)

With respect to 109 parts by mass of xylene, 100 parts by mass of a silicone resin (two-component condensation silicone resin, trade name "KE-118", produced by Shin-Etsu Chemical Co., Ltd.), 50 parts by mass of a hydrophobic silicone oil (methylphenyl silicone oil, trade name "KF50-100cs", produced by Shin-Etsu Chemical Co., Ltd.), 20 parts by mass of a hydrophilic silicone oil (polyether-modified silicone oil, trade name "KF6020", produced by Shin-Etsu Chemical Co., Ltd.), and 12 parts by mass of a polyerthyl silicate (trade name "ethyl silicate 40", produced by COLCOAT Co., Ltd.) were mixed, followed by being stirred at room temperature (23°C) for 5 minutes using a homomixer, an additive was uniformly dissolved and dispersed in a resin to obtain an antifouling coating composition.

In the silicone resin, a catalyst in KE-118 was changed to NEOSTANN U-130: dibutyltin oxylaurate (produced by Nitto Kasei Co., Ltd.), and 0.25 parts by mass of the catalyst was added with respect to 100 parts by mass of the resin. The same applies to the silicone resins KE-118 and KE-108 in Examples to be described later.

(Production of Fiber Product)

A polyethylene knotted net (30 twisted yarns, mesh size 25 mm) as the fiber base material was dip-coated onto the obtained antifouling coating composition and dried.

[Examples 2 to 10]

Antifouling coating compositions in Examples 2 to 10 were prepared in the same manner as in Example 1 except that the kind and the addition amount of the resin, the silicone oil, the crosslinking agent, and the solvent were changed as described in Table 1, and fiber products were produced.

[Examples 11 to 15]

Fiber products in Examples 11 to 15 were produced in the same manner as in Example 1 except that the kind and the addition amount of the resin, the silicone oil, the crosslinking agent, and the solvent were changed as described in Table 1, and the fiber base material was changed to a knotless net (400 deniers, 30 twisted yarns, 10 nodes) formed of polyethylene.

[Comparative Example 1]

An antifouling coating composition in Comparative Example 1 was prepared in the same manner as in Example 1 except that xylene was not added, and a fiber product was produced.

[Comparative Example 2]

An antifouling coating composition in Comparative Example 2 was prepared in the same manner as in Example 1 except that the addition amount of xylene was 61 parts by mass, and a fiber product was produced.

[Comparative Example 3]

An antifouling coating composition in Comparative Example 3 was prepared in the same manner as in Comparative Example 1 except that the silicone oil was not added, and a fiber product was produced.

[Comparative Example 4]

An antifouling coating composition in Comparative Example 4 was prepared in the same manner as in Example 11 except that the silicone oil was not added, and a fiber product was produced.

[Evaluation]

(Antifouling Property)

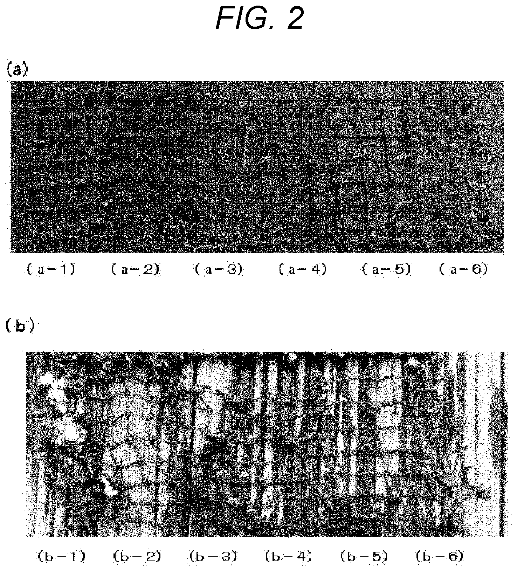

As shown in (a) of FIG. 2, the coating film attached to a surface of the left half of a net which is the fiber product in Example and Comparative Example was removed by rubbing with a finger, and the fishing net was fixed to a frame of 45 × 35 cm and was immersed in a draft part of a raft in Mikawa Bay, Aichi Prefecture which is a sea area with a strong activity of aquatic fouling organisms.
After a test period (3 months and 6 months), the net was pulled out, a photograph of the fishing net was captured from above, an attachment area (%) of aquatic organisms in the fishing net was visually confirmed, and the evaluation was performed according to the following criteria.

> A: the attachment area of aquatic organisms is 0%
> B: the attachment area of aquatic organisms is more than 0% and less than 10%
> C: the attachment area of aquatic organisms is 10% or more and less than 50%
> D: the attachment area of aquatic organisms is 50% or more

(Ease of Cleanability)

After a test period (6 months), the net was pulled out, the net was cleaned by using a high pressure washer, a photograph of the fishing net was captured from above, an attachment area (%) of aquatic organisms in the fishing net was visually confirmed, and the evaluation was performed according to the following criteria.

> A: the attachment area of aquatic organisms is 0%
> B: the attachment area of aquatic organisms is more than 0% and less than 10%
> C: the attachment area of aquatic organisms is 10% or more and less than 50%
> D: the attachment area of aquatic organisms is 50% or more

(Water Contact Angle)

The antifouling coating composition in each Example and Comparative Example is applied, with an applicator, to a surface of a PET film (product name "Lumirror", manufactured by Toray Industries, Inc.) having a length of 30 cm, a width of 25 cm, and a thickness of 0.75 cm, and the PET film is dried to form a coating film having a thickness of 100 $\mu$m, and a measurement sample is prepared.
For each measurement sample in each Example and Comparative Example, 2 $\mu$l of water was dropped on the surface of the coating film, and the water contact angle of the surface of the coating film after 5 minutes was measured by using a contact angle meter (DropMaster, manufactured by Kyowa Interface Science Co., Ltd.) with a sessile drop method according to JIS R3257.

(Mass Change Rate after Coating Film Removal)

Fishing nets of 30 knotless polyethylene nets of 400 deniers and 10 knots having a size of 20 cm × 15 cm were dip-coated in the antifouling coating composition of each Example and Comparative Example, the fishing nets were dried, and based on a mass (X) g after removing the coating film attached to the surface of the net by rubbing it with a finger, a mass (Y) g of the net before the dip-coating, and a mass (Z) g of the net after the dip-coating, the mass change rate (%) after coating film removal was calculated using the following formula. The mass change rate is a removal proportion of the cured product existing on the fiber base material surface and inside the fiber base material, and indicates that the larger the mass change rate is, the higher the removal rate of the cured product formed from the antifouling coating composition inside the fishing net (fiber base material).

$$\text{Mass change rate (\%)} = \{(Z - X)/(Z - Y)\} \times 100$$

[Table 1]

Table 1

| | Material | | | Example | | | | | | | |
|---|---|---|---|---|---|---|---|---|---|---|---|
| | | | | 1 | 2 | 3 | 4 | 5 | 6 | 7 | 8 |
| Antifouling coating composition | Resin | | KE-4464 | | | | | | | 100 | 100 |
| | | | KE-108 | | | | | 100 | 100 | | |
| | | | KE-118 | 100 | 100 | 100 | 100 | | | | |
| | | | M1913 | | | | | | | | |
| | Silicone oil | Hydrophobicity | KF96-100cs | | | | | | 50 | 50 | 50 |
| | | | KF50-100cs | 50 | 50 | 50 | 50 | 50 | | | |
| | | Hydrophilicity | KF-6020 | 20 | 20 | 20 | 20 | 20 | 20 | 20 | 20 |
| | Crosslinking agent | | Ethyl silicate 40 | 12 | 12 | 12 | 12 | 12 | 12 | 12 | 12 |
| | Solvent | | Xylene | 109 | 182 | 303 | 546 | 144 | 289 | 192 | 289 |
| Solvent content [% by mass] | | | | 37 | 50 | 62 | 75 | 44 | 61 | 51 | 61 |
| Evaluation | Antifouling property (3 months) | | With coating film removal | A | A | A | A | A | A | A | A |
| | | | No coating film removal | A | A | A | A | A | A | A | A |
| | Antifouling property (6 months) | | With coating film removal | C | C | C | C | C | C | B | B |
| | | | No coating film removal | C | C | C | C | C | C | B | B |
| | Ease of cleanability (after 6 months) | | With coating film removal | B | B | B | B | B | B | A | A |
| | | | No coating film removal | B | B | B | B | B | B | A | A |
| | Water contact angle [°] | | | 26 | 26 | 26 | 26 | 38 | 38 | 45 | 45 |
| | Mass change rate [%] | | With coating film removal | 29.2 | 0 | 0 | 0 | 2.2 | 0 | 0 | 0 |

Table 1 (continued)

| Material | | | | Example | | | | | | | Comparative Example | | | |
|---|---|---|---|---|---|---|---|---|---|---|---|---|---|---|
| | | | | 9 | 10 | 11 | 12 | 13 | 14 | 15 | 1 | 2 | 3 | 4 |
| Antifouling coating composition | Resin | | KE-4464 | 100 | 100 | | 17 | 39 | 65 | 85 | | | | |
| | | | KE-108 | | | | | | | | | | | |
| | | | KE-118 | | | | | | | | 100 | 100 | 100 | |
| | | | M1913 | | | 100 | 83 | 61 | 35 | 15 | | | | 100 |
| | Silicone oil | Hydrophobicity | KF96-100cs | 25 | 17.5 | 20 | 25 | 32 | 40 | 45 | | | | |
| | | | KF50-100cs | | | | | | | | 50 | 50 | | |
| | | Hydrophilicity | KF-6020 | 10 | 7 | 20 | 20 | 20 | 20 | 20 | 20 | 20 | | |
| | Crosslinking agent | | Ethyl silicate 40 | 12 | 12 | | 2 | 5 | 8 | 10 | 12 | 12 | 12 | |
| | Solvent | | Xylene | 289 | 289 | 746 | 667 | 570 | 447 | 357 | | 61 | | 746 |
| Solvent content [% by mass] | | | | 66 | 68 | 84 | 82 | 78 | 73 | 67 | 0 | 25 | 0 | 88 |
| Evaluation | Antifouling property (3 months) | | With coating film removal | A | A | B | B | B | A | B | A | A | C | D |
| | | | No coating film removal | A | A | B | B | B | A | B | A | A | C | D |
| | Antifouling property (6 months) | | With coating film removal | B | C | C | C | C | B | C | D | D | D | D |
| | | | No coating film removal | B | C | C | C | C | B | C | A | B | D | D |
| | Ease of cleanability (after 6 months) | | With coating film removal | A | B | B | B | B | A | B | D | D | D | D |
| | | | No coating film removal | A | B | B | B | B | A | B | A | B | D | D |
| | Water contact angle [°] | | | 49 | 54 | 51 | 40 | 46 | 39 | 44 | 26 | 26 | 99 | 91 |
| | Mass change rate [%] | | With coating film removal | 0 | 0 | 0 | 0 | 0 | 0 | 0 | 89.2 | 66.5 | 90.3 | 0 |

EP 4 474 436 A1

16

Components described in Table 1 will be described below. A resin hardness was a hardness measured by a type A durometer described in JIS K 6253 "hardness test method of vulcanized rubber and thermoplastic rubber", and used a catalog value. Further, cutting elongation and tensile strength of the resin were values measured according to JIS K 6251 "method of obtaining tensile properties of vulcanized rubber and thermoplastic rubber", and used a catalog value.

[Resin]

(Silicone Resin)

- KE-4464: one-component condensation-type liquid silicone resin (produced by Shin-Etsu Chemical Co., Ltd.) hardness 35, cutting elongation 200%, tensile strength 2.1 MPa, and weight average molecular weight (Mw) 78900 by GPC before curing
- KE-108: two-component condensation silicone resin (produced by Shin-Etsu Chemical Co., Ltd.) hardness 31, cutting elongation 90%, tensile strength 1.5 MPa, and weight average molecular weight (Mw) 35500 by GPC before curing
- KE-118: two-component condensation silicone resin (produced by Shin-Etsu Chemical Co., Ltd.) hardness 45, cutting elongation 90%, tensile strength 1.5 MPa, and weight average molecular weight (Mw) 38900 by GPC before curing

(Rubber-Based Resin)

- M1913: TUFTEC M1913, a maleic anhydride adduct (produced by Asahi Kasei Corporation) of SEBS (hydrogenated product of styrene·ethylene·butylene·styrene block copolymer), hardness 84, cutting elongation 600%, and tensile strength 22 MPa

[Silicone Oil]

(Hydrophobic Silicone Oil)

   ·KF96-100cs: dimethyl silicone oil (produced by Shin-Etsu Chemical Co., Ltd.)
   ·KF50-100cs: methylphenyl silicone oil (produced by Shin-Etsu Chemical Co., Ltd.)

(Hydrophilic Silicone Oil)

- KF-6020: polyether-modified silicone oil (produced by Shin-Etsu Chemical Co., Ltd.)

(Crosslinking Agent)

   E thyl silicate 40: Polyethyl silicate (produced by COLCOAT Co., Ltd.)

(Cured Product Area Ratio)

2 parts by mass of colorant (trade name "K-COLOR-BK-02", produced by Shin-Etsu Chemical Co., Ltd.) with respect 100 parts by mass of resin were added to the antifouling coating composition in Examples 1, 2, and 8 and Comparative Example 2, followed by being stirred using a homomixer for 5 minutes at room temperature (23°C), the additive was uniformly dissolved and dispersed in the resin, followed by being dip-coated onto a polyethylene knotted net (30 twisted yarns, mesh size 25 mm) and dried. After drying, the coating film attached to the net surface was rubbed with a finger to be removed, thereby obtaining a sample for net cross-section observation.

Using the obtained sample, a freezing microtome (RETORATOME REM-710, manufactured by YAMATO) was used to create a cross-sectional sample of the transverse cross-section of the twisted yarn forming a fishing net which is a fiber product, the surface was observed in a reflection mode using an optical microscope (manufactured by Nikon, SMZ1500), and a cross-sectional image of the twisted yarn was observed and captured using NIS Elements.

Image processing software (ImageJ) was used for the captured image to calculate a coating material area ratio, that is, a proportion (%) of the area ($mm^2$) of the cured product to the cross-sectional area ($mm^2$) of the fiber product using the following formula.

Cured product area ratio (%) = [(cross-sectional area of cured product)/(cross-sectional area of fiber product)] $\times$ 100

The measurement was performed five times, and an average value and the standard deviation of the measurement values in three measurements excluding the maximum value and the minimum value were calculated.

[Table 2]

Table 2

| | | | Comparative Example 2 | Example 1 | Example 2 | Example 8 |
|---|---|---|---|---|---|---|
| Solvent content [% by mass] | | | 25 | 37 | 50 | 61 |
| Cured product area ratio [%] | | n = 1 | 5.0 | 7.0 | 9.0 | 2.6 |
| | | n = 2 | 5.0 | 8.5 | 9.0 | 3.0 |
| | | n = 3 | 8.0 | 7.4 | 100 | 3.3 |
| | | Average value | 6.0 | 7.6 | 9.3 | 3.0 |
| | | Standard deviation | 1.4 | 0.6 | 0.5 | 0.3 |

(a) of FIG. 2 is a photograph captured from above of a fishing net (fiber base material) before the antifouling test of the embodiment and the comparative example in the present application, and (b) of FIG. 2 is a photograph captured from above of a fishing net (fiber product) after a 5-month antifouling test.

In (a) of FIG. 2, (a-1), (a-2), (a-3), (a-4), (a-5), and (a-6) respectively represent a fishing net with a surface coating film removal in Comparative Example 1, a fishing net with no surface coating film removal, a fishing net with a surface coating film removal in Comparative Example 2, a fishing net with no surface coating film removal, a fishing net with a surface coating film removal in Example 1, and a fishing net before the antifouling test without surface coating film removal. In (b) of FIG. 2, (b-1) to (b-6) are photographs of a fishing net after the 5-month antifouling test. corresponding to (a-1) to (a-6) in (a) of FIG. 2.

The fishing net in Examples of the present application has an antifouling performance over a long time regardless of whether the coating film attached to the surface of the fishing net is removed, and is excellent in cleanability.

On the other hand, the fishing net in Comparative Examples 1 and 2, which had a coating film formed by a coating composition in which the solvent content in the coating composition was less than 30% by mass, exhibited sufficient antifouling property (see (b-2) and (b-4) in (b) of FIG. 2) and ease of cleanability when the coating film on the surface of the fishing net was not removed, but when the coating film on the surface was removed, both the antifouling property (see (b-1) and (b-3) in (b) of FIG. 2) and ease of cleanability were inferior to those in Examples. It is presumed that as can be understood from the results of the mass change rate and the standard deviation of the coating material area ratio in Comparative Example 2 being 1 or more, in the fishing nets in Comparative Examples, as much of the coating film attached to the surface of the fishing net and the cured product formed inside are removed, the formed cured product is in a state of existing unevenly, and organisms enter the fiber starting from an area where a large amount of the coating film is, causing biological fouling. In actual use, the surface coating film can easily peel off due to friction with seawater or floating objects in the water, so it is not possible to ensure both the antifouling property and the ease of cleanability, which indicates a result of not suitable for use.

In Comparative Examples 3 and 4, a coating composition containing no silicone oil was used, and as can be understood from a result that the water contact angle was larger than that of the coating compositions in Examples, the antifouling performance of the coating composition itself is poor. Therefore, regardless of the presence or absence of the removal of coating film on the surface of the fishing net, both the antifouling property and the ease of cleanability were inferior to those in Examples.

INDUSTRIAL APPLICABILITY

According to the present invention, it is possible to provide a method for producing a fiber product having excellent cleanability, a fiber product, and an antifouling coating composition that can be suitably used for forming the fiber product.

Although the present invention has been described in detail and by reference to the specific embodiments, it is apparent to one skilled in the art that various modifications or changes can be made without departing the spirit and scope of the present invention.

The present application is based on a Japanese Patent Application (No. 2022-013698) filed on January 31, 2022, the contents of which are incorporated herein by reference.

REFERENCE SIGNS LIST

1: cured product
2: fiber
3: fiber product

Claims

1. A method for producing a fiber product comprising: a step of applying an antifouling coating composition to a fiber base material; and a step of drying and curing the antifouling coating composition, wherein the antifouling coating composition contains a resin, a silicone oil, and a solvent, the resin contains at least one selected from a silicone resin and a rubber-based resin, and the antifouling coating composition contains 30% by mass or more of the solvent.

2. The method for producing a fiber product according to claim 1, wherein a content of the silicone oil is 10 parts by mass to 150 parts by mass with respect to 100 parts by mass of the resin.

3. The method for producing a fiber product according to claim 1 or 2, wherein the silicone oil contains a hydrophilic silicone oil and a hydrophobic silicone oil.

4. The method for producing a fiber product according to claim 3, wherein a ratio of a content of the hydrophobic silicone oil to a content of the hydrophilic silicone oil (hydrophobic silicone oil content/hydrophilic oil content) is 0.5 to 10.

5. The method for producing a fiber product according to claim 1 or 2, wherein the antifouling coating composition further contains a crosslinking agent.

6. The method for producing a fiber product according to claim 1 or 2, wherein a water contact angle of a coating film formed by the antifouling coating composition is 70° or less.

7. An antifouling coating composition comprising: a resin; a silicone oil; and a solvent, wherein the resin contains at least one selected from a silicone resin and a rubber-based resin, and the antifouling coating composition contains 30% by mass or more of the solvent.

8. The antifouling coating composition according to claim 7, wherein a content of the silicone oil is 10 parts by mass to 150 parts by mass with respect to 100 parts by mass of the resin.

9. The antifouling coating composition according to claim 7 or 8, wherein the silicone oil contains a hydrophilic silicone oil and a hydrophobic silicone oil.

10. The antifouling coating composition according to claim 9, wherein a ratio of a content of the hydrophobic silicone oil to a content of the hydrophilic silicone oil (hydrophobic silicone oil content/hydrophilic oil content) is 0.5 to 10.

11. The antifouling coating composition according to claim 7 or 8, further comprising: a crosslinking agent.

12. The antifouling coating composition according to claim 7 or 8, wherein a water contact angle of a coating film formed by the antifouling coating composition is 70° or less.

**13.** A fiber product comprising:

a fiber base material; and
a cured product containing a resin and a silicone oil, wherein
the fiber base material is formed by a fiber bundle including a plurality of filaments,
at least a part of the cured product exists inside the fiber base material,
the resin contains at least one selected from a silicone resin and a rubber-based resin, and
a standard deviation of a cured product area ratio obtained by the following test method is less than 1,
(Test Method)
The cured product existing on a surface of the fiber base material of the fiber product is removed to prepare a measurement sample. A cross-sectional area of the cured product and a cross-sectional area of the fiber product are measured at five locations in any cross-section of the fiber bundle in a direction perpendicular to a length direction, and the cured product area ratio is calculated using the following formula. Values obtained by excluding a maximum value and a minimum value of the obtained cured product area ratio are used to calculate the standard deviation,

Cured product area ratio (%) = [(cross-sectional area of cured product)/(cross-sectional area of fiber product)] $\times$ 100.

**14.** The fiber product according to claim 13, wherein a content of the silicone oil is 10 parts by mass to 150 parts by mass with respect to 100 parts by mass of the resin.

**15.** The fiber product according to claim 13 or 14, wherein the silicone oil contains a hydrophilic silicone oil and a hydrophobic silicone oil.

**16.** The fiber product according to claim 15, wherein a ratio of a content of the hydrophobic silicone oil to a content of the hydrophilic silicone oil (hydrophobic silicone oil content/hydrophilic oil content) is 0.5 to 10.

*FIG. 1*

## FIG. 2

(a)

(a-1)　　(a-2)　　(a-3)　　(a-4)　　(a-5)　　(a-6)

(b)

(b-1)　(b-2)　(b-3)　(b-4)　(b-5)　(b-6)

## INTERNATIONAL SEARCH REPORT

| | International application No. |
|---|---|
| | **PCT/JP2023/002940** |

**A. CLASSIFICATION OF SUBJECT MATTER**

*C09D 5/16*(2006.01)i; *C09D 115/00*(2006.01)i; *C09D 183/04*(2006.01)i; *C09D 7/63*(2018.01)i; *C09D 7/65*(2018.01)i;
*C08J 7/04*(2020.01)i; *D06M 13/513*(2006.01)i; *D06M 15/643*(2006.01)i; *D06M 15/693*(2006.01)i
FI:  C09D183/04; C09D5/16; C09D7/63; C09D7/65; C09D115/00; D06M13/513; D06M15/643; D06M15/693; C08J7/04

According to International Patent Classification (IPC) or to both national classification and IPC

**B. FIELDS SEARCHED**

Minimum documentation searched (classification system followed by classification symbols)

C09D5/16; C09D115/00; C09D183/04; C09D7/63; C09D7/65; C08J7/04; D06M13/513; D06M15/643; D06M15/693

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 1-190612 A (CHUGOKU MARINE PAINTS, LTD.) 31 July 1989 (1989-07-31)<br>claims, page 2, upper left column, lines 7-9, page 2, lower right column, lines 12-16, page 4, lower left column, lines 10-17, page 4, lower right column, line 18 to page 5, upper left column, line 4, examples | 1-4, 6-10, 12-16 |
| X | JP 2018-080275 A (CHUGOKU MARINE PAINTS, LTD.) 24 May 2018 (2018-05-24)<br>claims, paragraphs [0009], [0044]-[0047], [0057], [0063]-[0073], [0090]-[0094], [0096]-[0099], examples | 1-4, 6-10, 12-16 |
| X | WO 2011/074620 A1 (CHUGOKU MARINE PAINTS, LTD.) 23 June 2011 (2011-06-23)<br>claims, paragraphs [0010]-[0011], [0108]-[0112], [0115], [0120], [0124], examples | 1-4, 6-10, 12-16 |
| X | WO 2008/081789 A1 (CHUGOKU MARINE PAINTS, LTD.) 10 July 2008 (2008-07-10)<br>claims, paragraphs [0009]-[0011], [0035]-[0038], [0065]-[0079], [0096], [0099]-[0100], [0108]-[0118], examples | 1-16 |
| X | JP 2003-238886 A (KANSAI PAINT CO., LTD.) 27 August 2003 (2003-08-27)<br>claims, paragraphs [0001], [0005], [0013]-[0017], [0024]-[0035], [0040], examples | 1-16 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 April 2023** | **18 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2023/002940**

C.    DOCUMENTS CONSIDERED TO BE RELEVANT

| Category* | Citation of document, with indication, where appropriate, of the relevant passages | Relevant to claim No. |
|---|---|---|
| X | WO 2014/077205 A1 (CHUGOKU MARINE PAINTS, LTD.) 22 May 2014 (2014-05-22) claims, paragraphs [0018], [0046], [0072], [0080]-[0086], [0089]-[0093], [0096]-[0097], [0117]-[0119], examples | 1-16 |
| A | JP 2018-172676 A (NITTO DENKO CORP.) 08 November 2018 (2018-11-08) entire text | 1-16 |

Form PCT/ISA/210 (second sheet) (January 2015)

**INTERNATIONAL SEARCH REPORT**
Information on patent family members

International application No.

**PCT/JP2023/002940**

| Patent document cited in search report | | | Publication date (day/month/year) | Patent family member(s) | Publication date (day/month/year) |
|---|---|---|---|---|---|
| JP | 1-190612 | A | 31 July 1989 | (Family: none) | |
| JP | 2018-080275 | A | 24 May 2018 | (Family: none) | |
| WO | 2011/074620 | A1 | 23 June 2011 | US 2012/0258321 A1 claims, paragraphs [0017]-[0018], [0144]-[0150], [0154]-[0155], [0164]-[0165], [0171], examples<br>EP 2514776 A1<br>CN 102666618 A<br>KR 10-2012-0095416 A | |
| WO | 2008/081789 | A1 | 10 July 2008 | US 2010/0041805 A1 claims, paragraphs [0016]-[0018], [0053]-[0056], [0091]-[0129], [0144], [0147]-[0148], [0156]-[0166], examples<br>EP 2103655 A1<br>CN 101568597 A<br>KR 10-2009-0101361 A | |
| JP | 2003-238886 | A | 27 August 2003 | (Family: none) | |
| WO | 2014/077205 | A1 | 22 May 2014 | US 2015/0299515 A1 claims, paragraphs [0036], [0062], [0088], [0095]-[0101], [0104]-[0108], [0111]-[0112], [0133]-[0136], examples<br>EP 2921538 A1<br>CN 104781356 A<br>KR 10-2015-0082501 A<br>JP 2017-71791 A | |
| JP | 2018-172676 | A | 08 November 2018 | US 2020/0032109 A1 entire text<br>WO 2018/182023 A1<br>EP 3604466 A1<br>CN 110475833 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011074620 A
- JP 2022013698 A